**Europäisches Patentamt**

**European Patent Office**

**Office européen des brevets**

(19)

(11) Veröffentlichungsnummer: **0 026 403**
**B1**

(12) # EUROPÄISCHE PATENTSCHRIFT

(45) Veröffentlichungstag der Patentschrift:
16.03.83

(51) Int. Cl.³: **G 03 B 27/32**

(21) Anmeldenummer: **80105597.1**

(22) Anmeldetag: **18.09.80**

(54) **Mikrofilm-Durchlaufaufnahmegerät.**

(30) Priorität: **26.09.79 DE 2938925**

(43) Veröffentlichungstag der Anmeldung:
**08.04.81 Patentblatt 81/14**

(45) Bekanntmachung des Hinweises auf die Patenterteilung:
**16.03.83 Patentblatt 83/11**

(84) Benannte Vertragsstaaten:
**CH FR GB IT LI**

(56) Entgegenhaltungen:
**DD-A-106 479**
**DE-B-1 214 524**
**DE-B-1 274 866**
**DE-B-2 746 990**
**US-A-2 964 994**

(73) Patentinhaber: **AGFA-GEVAERT Aktiengesellschaft,
D-5090 Leverkusen 1 (DE)**

(72) Erfinder: **Schuhmeir, Eugen, Rheingoldstrasse 1a,
D-8014 Neubiberg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Mikrofilm-Durchlaufaufnahmegerät

Die Erfindung betrifft ein Mikrofilm-Durchlaufaufnahmegerät, bei dem die zu verfilmenden Vorlagen an einer Abbildungsstation vorbeigeführt werden, in der sowohl die Vorderseite als auch, zumindest wahlweise, die Rückseite einer Vorlage gleichzeitig in verkleinertem Massstab auf einen Mikrobildträger abgebildet werden, wobei Beleuchtungsmittel vorgesehen sind zum zumindest wahlweisen Beleuchten beider Seiten der Vorlage im Bereich der Abbildungsstation, und bei dem in Transportrichtung der Vorlagen gesehen vor der Abbildungsstation eine Messstation zum Messen der Vorlagenhelligkeit angeordnet ist mit Beleuchtungsmitteln zum Beleuchten zumindest eines ausgewählten Teils der Vorlage im Bereich der Abbildungsstation und einem einer Seite der Vorlage gegenüberliegend angeordneten Messelement.

Ein Gerät dieser Gattung ist beispielsweise aus der DE-B1 Nr. 2746990 bekannt. Hierbei umfasst die Messstation eine auf die Vorlagenvorderseite gerichtete Beleuchtungslampe sowie ein Messelement, welches das von der Vorlagenvorderseite remittierte Licht registriert und ein entsprechendes Ausgangssignal erzeugt. Das Ausgangssignal dient zur Belichtungssteuerung, wodurch unterschiedliche Helligkeit der verschiedenen zu verfilmenden Vorlagen im Sinne einer optimalen, gleichmässigen Belichtung des Aufzeichnungsmaterials kompensiert wird.

Die bekannte Vorrichtung funktioniert nur dann optimal, wenn lediglich die Vorderseite der Vorlagen verfilmt wird und die einzelnen Vorlagen gleiche Transparenz aufweisen. Bei Verfilmung sowohl der Vorder- als auch der Rückseite der Vorlagen, der sogenannten Duplexverfilmung, entstehen bei Verwendung von gemischt dicken Vorlagen bzw. unterschiedlicher Transparenz der Vorlagen Belichtungsfehler, die ausserhalb des Norm-Filmdichtebereiches liegen. Nachdem das Mikrofilmmaterial eine sehr steile Gradation aufweist, führen bereits kleine Fehler in der Belichtung zu teilweise unbrauchbaren Ergebnissen. Die Belichtungsfehler entstehen dadurch, dass bei der Duplexverfilmung in der Abbildungsstation sowohl die Vorder- als auch die Rückseite der Vorlagen beleuchtet sind, so dass die tatsächliche Helligkeit der abgebildeten Vorlage sowohl vom Remissionswert der Vorlagenvorderseite als auch vom Transmissionswert der Vorlage selbst beeinflusst wird. Demgegenüber wird in der Messstation lediglich der Remissionswert der Vorlagenvorderseite berücksichtigt.

Der Erfindung liegt daher die Aufgabe zugrunde, ein Mikrofilm-Durchlaufaufnahmegerät gemäss dem Gattungsbegriff so weiterzubilden, dass bei Duplexverfilmung Belichtungsfehler auf einfache Weise weitestgehend vermieden werden.

Gemäss der Erfindung wird dies dadurch erreicht, dass die Beleuchtungsmittel der Messstation beide Seiten der Vorlage beleuchten.

Hierzu kann eine einzige Lichtquelle auf beide Seiten der Vorlage projiziert werden, zweckmässigerweise ist jedoch zu beiden Seiten der Vorlage jeweils ein Beleuchtungskörper angeordnet. Die Beleuchtungskörper sind relativ zur Vorlage vorzugsweise so angeordnet, dass das Licht sowohl der Beleuchtungsmittel der Abbildungsstation als auch der Beleuchtungsmittel der Messstation unter gleichem Winkel auf die Vorlage einfällt.

Durch die zusätzliche Beleuchtung der Vorlagenrückseite im Bereich der Messstation wird bei Ermittlung der Vorlagenhelligkeit durch das an der Vorlagenvorderseite angeordnete Messelement die Transmission der Vorlagen mit erfasst. In das Messelement gelangt somit Remissionslicht von der Vorlagenvorderseite sowie das durch die Vorlage hindurchtretende Transmissionslicht. Die Lichtverhältnisse an der Vorlage sind somit sowohl in der Messstation als auch in der Abbildungsstation gleich, nachdem bei der Duplexverfilmung aufgrund der sowohl an der Vorderseite als auch an der Rückseite der Vorlagen angeordneten Beleuchtungsmittel ebenfalls Remissionslicht als auch Transmissionslicht auftritt. Vorlagen unterschiedlicher Transparenz können ohne Belichtungsfehler verfilmt werden.

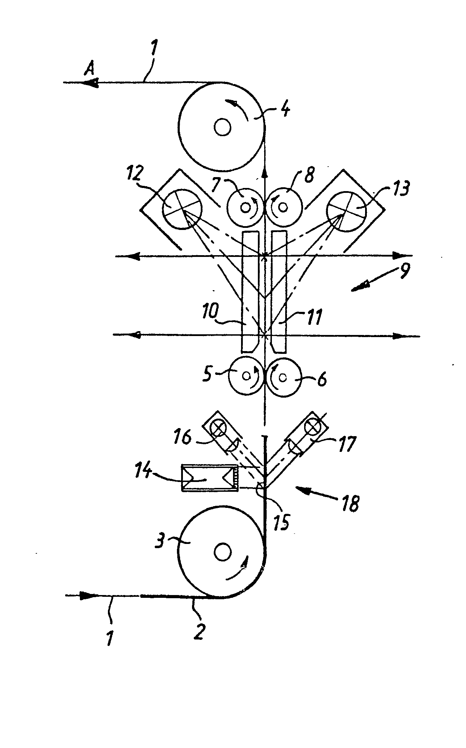

Im folgenden wird ein Ausführungsbeispiel der Erfindung anhand der Zeichnung näher erläutert. Die einzige Figur zeigt in halbschematischer Darstellung einen Schnitt durch ein Mikrofilm-Durchlaufaufnahmegerät.

In einem nicht näher dargestellten Mikrofilm-Durchlaufaufnahmegerät bekannter Art werden die einzelnen zu verfilmenden Vorlagen 2 über eine Eingabestation der Vorlagentransportbahn 1 zugeführt, in der sie über Transportmittel wie nicht dargestellte Transportriemen, Umlenkwalzen 3, 4 sowie Transportwalzenpaare 5, 6 und 7, 8 durch das Gerät zu einer Vorlagenausgabestation transportiert werden. Im Inneren des Gerätes werden die Vorlagen zwischen den Transportwalzenpaaren 5, 6 und 7, 8 an eine durch die Bezugsziffer 9 bezeichnete Abbildungsstation geführt, in der sie zwischen zwei transparenten Glasplatten 10, 11 in der Aufnahmeebene geführt werden. Zur Beleuchtung der Vorlagenvorder- bzw. -rückseite sind zwei Lampen bzw. Lampenbänke 12, 13 vorgesehen.

Während die Vorlage die Abbildungsstation 9 durchläuft, wird deren Vorder- und Rückseite streifenweise über eine Spiegel- und Linsenoptik bekannter Art, wie sie z.B. in der eingangs genannten DE-B1 Nr. 2746990 gezeigt ist, auf einen synchron mit den Vorlagen bewegten Mikrofilm abgebildet.

Zur Ermittlung der Vorlagenhelligkeit ist in Vorlagentransportrichtung A gesehen vor der Abbildungsstation 9 eine lichtelektrische Elemente umfassende Messeinrichtung 14 vorgesehen, welche die Helligkeit eines bestimmten, ausgewählten Bereiches der jeweils zu verfilmenden Vorlage misst und deren Ausgangssignal zur Belichtungssteuerung dient. Die Belichtungssteuerung kann beispielsweise in der in der DE-B1 Nr. 2746990 beschriebenen Weise erfolgen.

Zur Beleuchtung des dem Messelement gegenüberliegenden Bereiches 15 der Vorlage ist zu beiden Seiten der Vorlagentransportbahn jeweils eine Lampe 16, 17 vorgesehen, deren Licht auf die Vorder- und Rückseite des Bereiches 15 gerichtet ist. Auf diese Weise empfängt das Messelement 14 nicht nur das von der Lampe 16 im Bereich 15 reflektierte Licht, sondern auch Transmissionslicht von der Lampe 17. Die Beleuchtungsverhältnisse in der Messstation 18 entsprechen somit den Beleuchtungsverhältnissen in der Abbildungsstation 9. Vorzugsweise sind die Lampen 16 und 17 so angeordnet, dass der Winkel ihrer Leuchtrichtung mit der Vorlagentransportbahn 1 gleich ist dem Winkel der Leuchtrichtung der Beleuchtungslampen 12 und 13 mit der Vorlagentransportbahn im Bereich der Abbildungsebene.

Bei Verfilmung von jeweils nur den Vorderseiten der Vorlagen 2 werden Beleuchtungslampe 13 und 17 abgeschaltet, so dass wiederum in der Abbildungsstation und in der Messstation vergleichbare Beleuchtungsverhältnisse vorherrschen.

## Patentansprüche

1. Mikrofilm-Durchlaufaufnahmegerät, bei dem die zu verfilmenden Vorlagen an einer Abbildungsstation vorbeigeführt werden, in der sowohl die Vorderseite als auch, zumindest wahlweise, die Rückseite einer Vorlage gleichzeitig in verkleinertem Massstab auf einen Mikrobildträger abgebildet werden, wobei Beleuchtungsmittel vorgesehen sind zum zumindest wahlweisen Beleuchten beider Seiten der Vorlage im Bereich der Abbildungsstation, und bei dem in Transportrichtung der Vorlagen gesehen vor der Abbildungsstation eine Messstation zum Messen der Vorlagenhelligkeit angeordnet ist mit Beleuchtungsmitteln zum Beleuchten zumindest eines ausgewählten Teils der Vorlage im Bereich der Messstation und einem einer Seite der Vorlage gegenüberliegend angeordneten Messelement, dadurch gekennzeichnet, dass die Beleuchtungsmittel (16, 17) der Messstation (18) beide Seiten der Vorlage (2) beleuchten.

2. Mikrofilm-Durchlaufaufnahmegerät nach Anspruch 1, dadurch gekennzeichnet, dass zum Beleuchten der Vorlage (2) im Bereich der Messstation zu beiden Seiten der Vorlage jeweils ein Beleuchtungskörper (16, 17) angeordnet ist.

3. Mikrofilm-Durchlaufaufnahmegerät nach einem der beiden Ansprüche 1 oder 2, dadurch gekennzeichnet, dass das Licht sowohl der Beleuchtungsmittel (12, 13) der Abbildungsstation (9) als auch der Beleuchtungsmittel (16, 17) der Messstation (18) unter gleichem Winkel auf die Vorlage (2) einfällt.

4. Mikrofilm-Durchlaufaufnahmegerät nach einem der vorhergehenden Ansprüche, dadurch gekennzeichnet, dass zur Verfilmung lediglich einer einzigen Vorlagenseite die für die gegenüberliegende Vorlagenseite vorgesehenen Beleuchtungsmittel (13, 17) sowohl der Abbildungsstation (9) als auch der Messstation (18) abschaltbar sind.

## Revendications

1. Appareil de prise de vues en continu pour microfilm, dans lequel les originaux à filmer défilent dans un poste de reproduction dans lequel tant le recto qu'au moins, en partie, le verso d'un original sont reproduits simultanément à échelle réduite sur un support de microfilm, des moyens d'éclairage étant prévus pour l'éclairage au moins éventuel des deux faces de l'original dans la région du poste de reproduction, et dans lequel, en amont du poste de reproduction suivant le sens d'entraînement des originaux, est disposé un poste de mesure destiné à mesurer la luminosité des originaux et ayant des moyens d'éclairage destinés à éclairer au moins une partie sélectionnée de l'original dans la région du poste de mesure et un élément de mesure disposé en regard d'une face de l'original, caractérisé en ce que les moyens d'éclairage (16, 17) du poste de mesure (18) éclairent les deux faces de l'original (2).

2. Appareil de prise de vues en continu pour microfilm suivant la revendication 1, caractérisé en ce que, pour éclairer l'original (2), des appareils d'éclairage (16, 17) sont disposés respectivement des deux côtés de l'original dans la région du poste de mesure.

3. Appareil de prise de vues en continu pour microfilm suivant l'une des revendications 1 ou 2, caractérisé en ce que la lumière, tant des moyens d'éclairage (12, 13) du poste de reproduction (9) que des moyens d'éclairage (16, 17) du poste de mesure (18), a le même angle d'incidence sur l'original (2).

4. Appareil de prise de vues en continu pour microfilm suivant l'une des revendications précédentes, caractérisé en ce que, pour filmer simplement une seule face de l'original, les moyens d'éclairage (13, 17), tant du poste de reproduction (9) que du poste de mesure (18) prévus sur la face opposée de l'original, peuvent être arrêtés.

## Claims

1. A microfilm continuous camera, in which the originals to be filmed are moved past an image-forming station in which both the observe and, at least where desired, the reverse of an original are simultaneously reproduced on a reduced scale on a micrograph carrier, illuminating means being provided for at least selectively illuminating both sides of the original in the region of the image-forming station, and in which, viewed in the direction of movement of the originals, there is placed in front of the image-forming station a measuring station for measuring the brightness of the originals with illuminating means for illuminating at least a selected part of the original in the region of the measuring station and a measuring element arranged opposite one side of the original, characterized in that the illuminating means (16, 17) of the measuring station (18) illuminate both sides of the original (2).

2. A microfilm continuous camera according to claim 1, characterized in that, in order to illuminate the original (2) in the region of the measuring station, there is arranged on both sides of the original an illuminator (16, 17) in each case.

3. A microfilm continuous camera according to claim 1 or 2, characterized in that the light both from the illuminators (12, 13) of the image-forming station (9) and from the illuminators (16, 17) of the measuring station (18) strikes the original (2) at the same angle.

4. A microfilm continuous camera according to any one of the preceding claims, characterized in that, in order to film only a single side of the original, it is possible to switch off the illuminators (13, 17) of both the image-forming station (9) and the measuring station (18) provided for the opposite side of the original.